(19) Europäisches Patentamt
European Patent Office
Office européen des brevets

(11) **EP 2 582 561 B1**

## (12) EUROPÄISCHE PATENTSCHRIFT

(45) Veröffentlichungstag und Bekanntmachung des Hinweises auf die Patenterteilung:
**19.11.2014 Patentblatt 2014/47**

(21) Anmeldenummer: **11721018.7**

(22) Anmeldetag: **11.05.2011**

(51) Int Cl.:
**B60T 13/74** *(2006.01)* **B60T 8/17** *(2006.01)*

(86) Internationale Anmeldenummer:
**PCT/EP2011/057610**

(87) Internationale Veröffentlichungsnummer:
**WO 2011/157492 (22.12.2011 Gazette 2011/51)**

### (54) VERFAHREN UND VORRICHTUNG ZUR REGELUNG EINER ELEKTRISCH BETÄTIGBAREN BREMSE SOWIE ELEKTRONISCHES BREMSSYSTEM

METHOD AND DEVICE FOR CONTROLLING AN ELECTRICALLY ACTUABLE BRAKE AND AN ELECTRONIC BRAKE SYSTEM

PROCÉDÉ ET DISPOSITIF DE RÉGLAGE D'UN FREIN À ACTIONNEMENT ÉLECTRIQUE ET SYSTÈME DE FREINAGE ÉLECTRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.07.2010 DE 102010038306**
**15.06.2010 EP 10464005**

(43) Veröffentlichungstag der Anmeldung:
**24.04.2013 Patentblatt 2013/17**

(73) Patentinhaber: **Continental Teves AG & Co. oHG 60488 Frankfurt (DE)**

(72) Erfinder: **STAN, Marian 61440 Oberursel (DE)**

(56) Entgegenhaltungen:
**WO-A1-01/68428       WO-A1-99/26829**
**WO-A1-2005/100114    DE-A1- 19 730 094**

**Beschreibung**

Die Erfindung betrifft ein Verfahren zur Regelung einer mittels eines Aktuators elektrisch betätigbaren Bremse gemäß dem Oberbegriff von Anspruch 1 und eine Vorrichtung gemäß dem Oberbegriff von Anspruch 11. Sie betrifft ferner ein elektronisches Bremssystem mit einer derartigen Vorrichtung.

Ein Verfahren sowie ein Regelsystem zum Aufbringen definierter Spannkräfte bei einer mittels eines Elektromotors betätigbaren Scheibenbremse sind aus der internationalen Patentanmeldung WO 05/100114 bekannt. Das Regelsystem hat dabei eine Kaskadenstruktur, die aus drei aufeinanderfolgenden Reglern besteht, nämlich einem ersten Regler, welcher als Kraft-Wegregler ausgebildet ist, einem dem ersten Regler nachgeschalteten zweiten Regler, welcher als Drehzahlregler ausgeführt ist, sowie einem dem zweiten Regler nachgeschalteten dritten Regler, welcher als Stromregler ausgeführt ist. Dem Regelsystem wird lediglich ein Spannkraft-Sollwert zugeführt, d.h. mit dem Regelsystem ist eine Kraftregelung zur Einstellung dieses Spannkraft-Sollwertes möglich.

In der DE 103 02 515 A1 wird eine Vorrichtung und ein Verfahren zur Kraft- und Positionsregelung eines elektrischen Bremssystems eines Kraftfahrzeugs beschrieben. Die Regelkreisstruktur kann in zwei Betriebsarten, Kraftregelung oder Positionsregelung, betrieben werden, wobei der Wechsel zwischen den Betriebsarten durch einen Schalter erfolgt, wodurch der Position-Sollwert für den Motorregler entweder von einem Kraftregler oder von einer weiteren Einheit bereitgestellt wird. Die beschriebene Regelkreisstruktur besitzt somit sozusagen zwei parallele Einheiten (Kraftregler und weitere Einheit), wobei für eine vorgegebene Betriebsart nur eine der beiden Einheiten verwendet wird.

Es ist daher Aufgabe der vorliegenden Erfindung, ein Verfahren sowie eine Vorrichtung zur Regelung einer mittels eines Aktuators elektrisch betätigbaren Bremse vorzuschlagen, welches/welche mit einer einheitlichen, insbesondere einfachen, Reglervorrichtung eine situationsangepasste Regelung durchführen kann.

Diese Aufgabe wird erfindungsgemäß durch ein Verfahren gemäß Anspruch 1 sowie eine Vorrichtung gemäß Anspruch 11 gelöst.

Der Erfindung liegt der Gedanke zugrunde, dass die Reglervorrichtung neben einer vorgegebenen einheitlichen Reglerstruktur, welcher eine vorgegebenen Art von Reglerstruktur-Eingangsgrößen zugeführt werden, eine Auswahl- und Auswerteeinrichtung umfasst, welche aus den Eingangsgrößen der Reglervorrichtung die geeigneten Reglerstruktur-Eingangsgrößen bestimmt, so dass die Reglervorrichtung trotz einer fest vorgegebenen Reglerstruktur zumindest zwei verschiedene Regelungsmodi, wie Kraftregelung oder Geschwindigkeitsregelung oder Positionsregelung, durchführen kann.

Unter dem Begriff Aktuatorposition wird erfindungsgemäß neben einer Position, z.B. der axialen Position einer Spindel des Aktuators, auch ein Winkel, z.B. der Winkel eines Rotors des Aktuators, oder eine andere die Position charakterisierende Größe verstanden.

Ein Vorteil der Erfindung liegt darin, dass bei gleicher Funktionalität die Anzahl der benötigten Regler/Einheiten gegenüber den bekannten Regelkreisstrukturen reduziert werden kann und somit die Herstellungskosten reduziert werden können.

Ein weiterer Vorteil der Erfindung liegt in der einheitlichen einfachen Struktur, welche eine einfachere Ansteuerung zur Folge hat, z.B. wenn die Reglervorrichtung neu initialisiert werden soll.

Des Weiteren ist ein Wechseln zwischen Regelungsmodi durch die einheitliche Struktur einfach möglich, ohne z.B. Schaltvorgänge im Regler selbst durchführen zu müssen. So wird das Auftreten von undefinierten Reglerzuständen vermieden.

Bevorzugt ist die Reglervorrichtung mit derselben Reglerstruktur in zumindest drei Regelungsmodi, Kraftregelung oder Positionsregelung oder Geschwindigkeitsregelung, betreibbar.

Um eine Auswahl des Regelungsmodus zu ermöglichen, wird der Auswahl- und Auswerteeinrichtung bevorzugt als Eingangsgröße ein Regelungsmodus-Parameter zugeführt, durch welchen der von der Reglervorrichtung durchzuführende Regelungsmodus bestimmt wird. Die weiteren Eingangsgrößen der Auswahl- und Auswerteeinrichtung hängen von dem Regelungsmodus-Parameter ab, wobei der Auswahl- und Auswerteeinrichtung zumindest ein Aktuator-Istwert und zumindest ein Aktuator-Sollwert bereitgestellt werden. Besonders bevorzugt werden der Auswahl- und Auswerteeinrichtung unabhängig vom Regelungsmodus-Parameter Istwerte für die Aktuatorspannkraft und die Aktuatorposition zugeführt, wobei die Auswahl- und Auswerteeinrichtung nur den für den jeweiligen Regelungsmodus benötigten Istwert zur Auswertung heranzieht.

Gemäß einer bevorzugten Ausführungsform der Erfindung umfasst die Reglerstruktur zumindest einen Positionsregler und die Auswahl- und Auswerteeinrichtung stellt der Reglerstruktur in jedem Regelungsmodus eine Aktuatorposition als Reglerstruktur-Eingangssollwert und Reglerstruktur-Eingangsistwert bereit.

Gemäß einer vorteilhaften Weiterbildung der Erfindung umfasst die Reglerstruktur einen Positionsregler mit einen dem Positionsregler nachgeschalteten Geschwindigkeitsregler. Dem Geschwindigkeitsregler werden dann als Eingangsgrößen ein von dem Positionsregler ausgegebener Aktuatorgeschwindigkeit-Sollwert und der Aktuatorgeschwindigkeit-Istwert zugeführt. Besonders bevorzugt umfasst die Reglerstruktur keinen weiteren Regler, so dass der Geschwindigkeitsregler die Stellgröße für den Aktuator ausgibt. Vorteilhafterweise umfasst der Positionsregler eine Geschwindigkeitsbegrenzung, welche den vom Positionsregler ausgegebenen Aktuatorgeschwindigkeit-Sollwert auf einen vorgegebenen Maximalwert begrenzt, um so den Aktuator vor Beschädigung zu schützen.

Zur Durchführung einer Kraftregelung werden entsprechend einer bevorzugten Ausführungsform eines erfindungsgemäßen Verfahrens in der Auswahl- und Auswerteeinrichtung anhand eines vorgegebenen Zusammenhangs zwischen Aktuatorposition und Aktuatorspannkraft aus dem der Auswahl- und Auswerteeinrichtung zugeführten Aktuatorspannkraft-Sollwert ein Sollwert für die Aktuatorposition und aus dem der Auswahl- und Auswerteeinrichtung zugeführten Aktuatorspannkraft-Istwert ein Istwert für die Aktuatorposition bestimmt. Diese bestimmten Soll- und Istwerte für die Aktuatorposition werden als Reglerstruktur-Eingangssollwert und Reglerstruktur-Eingangsistwert an den Positionsregler ausgegeben.

Für eine schnelle Bestimmung der Soll- und Istwerte für die Aktuatorposition ist der vorgegebenen Zusammenhang zwischen Aktuatorposition und Aktuatorspannkraft bevorzugt in Form einer Tabelle in der Auswahl- und Auswerteeinrichtung abgelegt.

Gemäß einer weiteren bevorzugten Ausführungsform eines erfindungsgemäßen Verfahrens werden zur Geschwindigkeitsregelung der Auswahl- und Auswerteeinrichtung ein Aktuatorgeschwindigkeit-Sollwert und ein Aktuatorposition-Istwert zugeführt. Aus dem Aktuatorgeschwindigkeit-Sollwert wird in der Auswahl- und Auswerteeinrichtung ein Sollwert für die Aktuatorposition bestimmt, welcher zusammen mit dem Aktuatorposition-Istwert an den Positionsregler ausgegeben wird.

Im Falle eines dem Positionsregler nachgeschalteten Geschwindigkeitsreglers wird bei einer Geschwindigkeitsregelung der Sollwert für die Aktuatorposition in der Auswahl- und Auswerteeinrichtung bevorzugt derart aus dem Aktuatorgeschwindigkeit-Sollwert bestimmt, dass der von dem Positionsregler ausgegebene Aktuatorgeschwindigkeit-Sollwert dem Aktuatorgeschwindigkeit-Sollwert entspricht, welcher der Auswahl- und Auswerteeinrichtung zugeführt wurde. So kann durch eine vorgegebene Reglerstruktur mit einem externen Positionsregler und einem internen Geschwindigkeitsregler eine Geschwindigkeitsregelung durchgeführt werden.

Bevorzugt ist die Reglervorrichtung in einem Regelungsmodus mit relativer Positionsregelung betreibbar. Hierzu werden der Auswahl- und Auswerteeinrichtung ein relativer Aktuatorposition-Sollwert, welcher eine gewünschte Positionsänderung wiedergibt, und ein Aktuatorposition-Istwert zugeführt. Die Auswahl- und Auswerteeinrichtung bestimmt durch Addition aus dem relativen Aktuatorposition-Sollwert und einem vor Eintritt in den relativen Positionsregelungsmodus abgespeicherten Aktuatorposition-Wert einen Sollwert für die Aktuatorposition, welcher zusammen mit dem Aktuatorposition-Istwert an den Positionsregler ausgegeben wird.

Bevorzugt ist die Reglervorrichtung alternativ oder zusätzlich in einem Regelungsmodus mit absoluter Positionsregelung betreibbar, in welcher der Auswahl- und Auswerteeinrichtung zumindest ein Aktuatorposition-Sollwert und ein Aktuatorposition-Istwert zugeführt werden, welche als Reglerstruktur-Eingangssollwert und Reglerstruktur-Eingangsistwert dem Positionsregler der Reglerstruktur zugeführt werden.

Gemäß einer bevorzugten Ausführungsform der Erfindung werden der Regelungsmodus-Parameter und der mindestens eine Aktuator-Sollwert der Auswahl- und Auswerteeinrichtung von einer übergeordneten elektronischen Steuer- und Regeleinheit zugeführt. Der übergeordneten elektronischen Steuer- und Regeleinheit liegen üblicherweise Informationen und/oder Anforderungen vor, z.B. bezüglich des Fahrerbremswunschs, Anforderungen eines Schlupfregelsystems (ABS: Antiblockiersystems, TCS: Traktionsregelsystem) oder Fahrerassistenzsystems (ESC: electronic stability control), Initialisierungsanforderung, Anforderung zur Lüftspieleinstellung etc., so dass in der übergeordneten elektronischen Steuer- und Regeleinheit über eine passende Regelung der Bremse entschieden werden kann und der entsprechende Aktuator-Sollwert bestimmt wird.

Die Erfindung betrifft auch ein elektronisches Bremssystem für ein Kraftfahrzeug mit zumindest einer mittels eines Aktuators elektrisch betätigbaren Bremse und mit einer Steuer- und Regeleinheit, wobei die Steuer- und Regeleinheit zumindest eine erfindungsgemäße Vorrichtung aufweist oder mit zumindest einer erfindungsgemäßen Vorrichtung verbunden ist.

Weitere bevorzugte Ausführungsformen der Erfindung ergeben sich aus den Unteransprüchen und der nachfolgenden Beschreibung anhand von Figuren.

Es zeigen schematisch:

Fig. 1 ein Ausführungsbeispiel einer erfindungsgemäßen Vorrichtung,

Fig. 2 ein Ausführungsbeispiel eines erfindungsgemäßen Verfahrens zur Durchführung einer Kraftregelung,

Fig. 3 ein Ausführungsbeispiel eines erfindungsgemäßen Verfahrens zur Durchführung einer Geschwindigkeitsregelung, und

Fig. 4 ein Ausführungsbeispiel eines erfindungsgemäßen elektronischen Bremssystems.

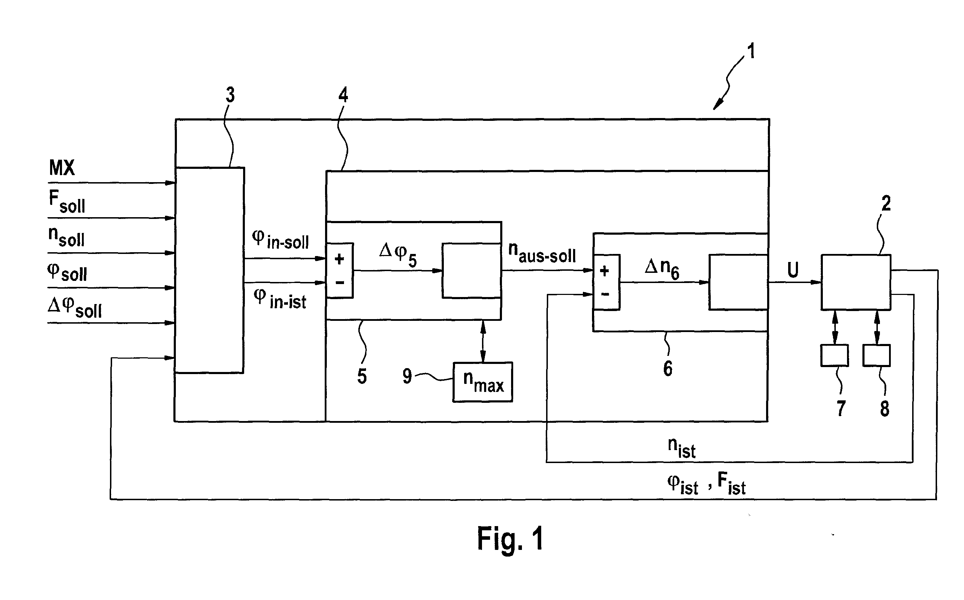

Fig. 1 gibt schematisch ein Ausführungsbeispiel einer erfindungsgemäßen Vorrichtung wieder. Die Vorrichtung umfasst eine Reglervorrichtung 1, mit welcher ein Aktuator 2 einer elektromechanisch betätigbaren Bremse über eine Stellgröße U, z.B. eine Spannung, angesteuert wird. Mittels eines Spannkraftsensors 7 wird die Zuspannkraft $F_{ist}$ der Bremse gemessen. Zudem wird die jeweils aktuelle Aktuatorposition $\varphi_{ist}$ durch ein Positionsmesssystem 8 gemessen. Die Aktuatorpositionsmessung kann durch Messung eines Winkels, z.B. des Aktuators oder eines dem Aktuator nachgeschalteten Getriebes, oder einer Position, z.B. einer axialen Position einer von dem Aktuator angetriebenen Spindel, realisiert sein. Die Aktuatorgeschwindigkeit $n_{ist}$ (bzw. Aktuatordrehzahl) wird beispielsgemäß durch Differenzieren des der gemessenen Aktuatorposition entsprechenden Signals des Positionsmesssystems 8 gebildet. Alternativ oder zusätzlich kann die Aktuatorgeschwindigkeit $n_{ist}$ auch mit einem zusätzlichen Aktuatorgeschwindigkeitsensor gemessen werden.

Reglervorrichtung 1 umfasst eine Auswahl- und Auswerteeinrichtung 3 und eine Reglerstruktur 4. Auswahl- und Auswerteeinrichtung 3 werden als Eingangsgrößen ein Regelungsmodus-Parameter MX, welcher den gewünschte Regelungsmodus (Kraftregelung oder Positionsregelung oder Geschwindigkeitsregelung) der Reglervorrichtung 1 bestimmt, und zumindest ein Sollwert $F_{soll}$, $\varphi_{soll}$, $\Delta\varphi_{soll}$, $n_{soll}$ als Führungsgröße für die Regelung zugeführt. Die Auswahl- und Auswerteeinrichtung 3 gibt unabhängig von dem Regelungsmodus einen Sollwert $\varphi_{in\text{-}soll}$ und einen Istwert $\varphi_{in\text{-}ist}$ einer vorgegebenen Aktuatorgröße (z.B. Aktuatorposition $\varphi$ oder Aktuatorzuspannkraft F oder Aktuatorgeschwindigkeit n) aus, welche der Reglerstruktur 4 als Reglerstruktur-Eingangssollwert und Reglerstruktur-Eingangsistwert (Reglerstruktur-Eingangsgrößen) zugeführt werden. Beispielsgemäß handelt es sich bei der vorgegebenen Aktuatorgröße um die Aktuatorposition, d.h. die Auswahl- und Auswerteeinrichtung 3 gibt einen Position-Sollwert und einen Position-Istwert als Reglerstruktur-Eingangssollwert $\varphi_{in\text{-}soll}$ und Reglerstruktur-Eingangsistwert $\varphi_{in\text{-}ist}$ an Reglerstruktur 4 aus. Der Auswahl- und Auswerteeinrichtung 3 werden als Eingangsgrößen beispielsgemäß außerdem der Aktuatorspannkraft-Istwert $F_{ist}$ und der Aktuatorposition-Istwert $\varphi_{ist}$ zugeführt.

Reglerstruktur 4 umfasst beispielsgemäß einen Positionsregler 5 (P-Regler) und einen dem Positionsregler 5 nachgeschalteten Geschwindigkeitsregler 6 (PI-Regler). Positionsregler 5 gibt als Ausgangsgröße einen Aktuatorgeschwindigkeit-Sollwert $n_{aus\text{-}soll}$ aus, welcher als Eingangsgröße an den nachgeschalteten Geschwindigkeitsregler 6 übergeben wird. Außerdem wird Geschwindigkeitsregler 6 als Eingangsgröße der Aktuatorgeschwindigkeit-Istwert $n_{ist}$ zugeführt.

Optional kann eine Aktuatorgeschwindigkeitsbegrenzung 9 vorhanden sein, welche den von Positionsregler 5 ausgegebenen Aktuatorgeschwindigkeit-Sollwert $n_{aus\text{-}soll}$ auf einen vorgegebenen Maximalwert $n_{max}$ begrenzt, um den Aktuator 2 vor Beschädigung zu schützen.

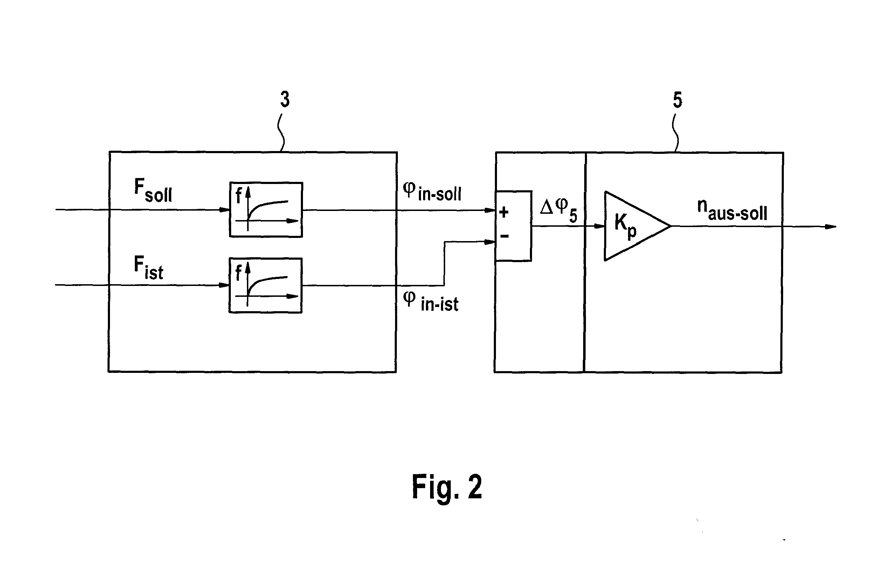

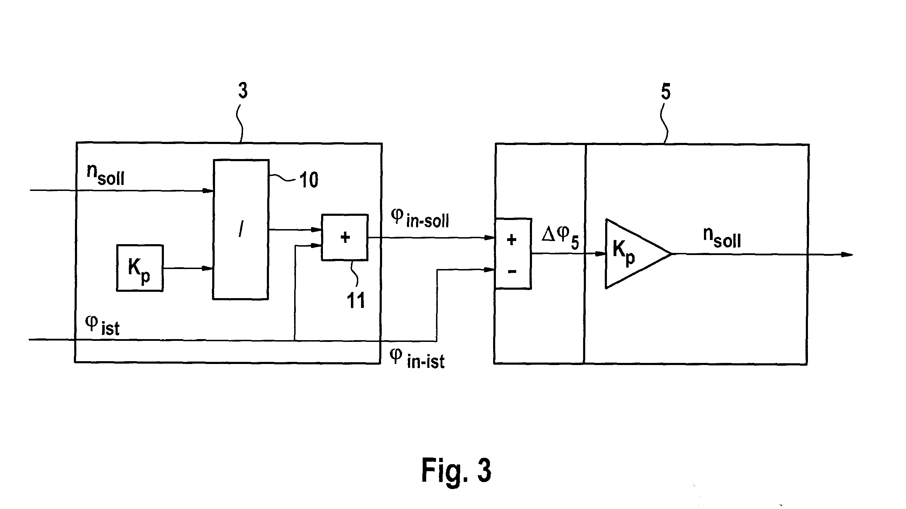

Die Funktionsweise der in Fig. 1 dargestellten Vorrichtung bzw. die Durchführung eines erfindungsgemäßen Verfahrens wird nachfolgend, insbesondere im Zusammenhang mit Fig. 2 und 3, näher erläutert.

In Fig. 2 ist schematisch ein Ausführungsbeispiel eines erfindungsgemäßen Verfahrens zur Durchführung einer Kraftregelung dargestellt. Bei einer Kraftregelung (gekennzeichnet durch einen Regelungsmodus-Parameter M1) werden der Reglervorrichtung 1 zumindest ein Aktuatorspannkraft-Istwert $F_{ist}$ und ein Ak-

tuatorspannkraft-Sollwert $F_{soll}$ als Eingangsgrößen zugeführt. In der Auswahl- und Auswerteeinrichtung 3 werden aus dem Aktuatorspannkraft-Istwert $F_{ist}$ und dem Aktuatorspannkraft-Sollwert $F_{soll}$ ein entsprechender Istwert $\varphi_{in\text{-}ist}$ und ein entsprechender Sollwert $\varphi_{in\text{-}soll}$ für die Aktuatorposition bestimmt. Dies geschieht mit Hilfe eines vorgegebenen funktionalen Zusammenhangs f zwischen der Aktuatorposition $\varphi$ und der Aktuatorspannkraft F, welcher charakteristisch für die verwendete Bremse ist. Der funktionale Zusammenhang f, welcher in Fig. 2 schematisch als Kennlinie dargestellt ist, kann z.B. in Form einer Tabelle oder in Form einer mathematischen Formel vorgegeben sein. Die anhand des funktionalen Zusammenhangs f bestimmten Ist- und Sollwert $\varphi_{in\text{-}ist}$, $\varphi_{in\text{-}soll}$ werden dem Positionsregler 5 zugeführt, welcher als P-Regler mit einem proportionalen Anteil der Verstärkung $K_p$ ausgeführt ist. In Positionsregler 5 wird die Differenz aus Sollwert $\varphi_{in\text{-}soll}$ und Istwert $\varphi_{in\text{-}ist}$ gebildet, welche als Positionsfehler $\Delta\varphi_5$ bezeichnet ist. Positionsregler 5 hat die Aufgabe, dass der Istwert $\varphi_{in\text{-}ist}$ dem Sollwert $\varphi_{in\text{-}soll}$ folgt, d.h. dass der Positionsfehler $\Delta\varphi_5$ Null wird. Der Ausgang des Positionsreglers 5 ist ein entsprechender Sollwert $n_{aus\text{-}soll}$ für den nachfolgenden Geschwindigkeitsregler 6. Der Geschwindigkeitsregler 6 bewertet die Abweichung $\Delta n_6$ zwischen dem Aktuatorgeschwindigkeit-Sollwert $n_{aus\text{-}soll}$ und dem Aktuatorgeschwindigkeit-Istwert $n_{ist}$, welche dem Geschwindigkeitsregler 6 ebenfalls zugeführt wird, und gibt eine entsprechende Stellgröße U an den Aktuator 2 aus (siehe Fig. 1).

Fig. 3 ist schematisch ein Ausführungsbeispiel eines erfindungsgemäßen Verfahrens zur Durchführung einer Geschwindigkeitsregelung dargestellt. Bei einer Geschwindigkeitsregelung (gekennzeichnet durch einen Regelungsmodus-Parameter M2) werden der Reglervorrichtung 1 zumindest ein Aktuatorposition-Istwert $\varphi_{ist}$ und ein Aktuatorgeschwindigkeit-Sollwert $n_{soll}$ als Eingangsgrößen zugeführt. In der Auswahl- und Auswerteeinrichtung 3 wird aus dem Aktuatorgeschwindigkeit-Sollwert $n_{soll}$ ein Sollwert $\varphi_{in\text{-}soll}$ für die Aktuatorposition derart bestimmt, dass der von dem nachfolgenden Positionsregler 5 ausgegebene Aktuatorgeschwindigkeit-Sollwert $n_{aus\text{-}soll}$ dem der Auswahl- und Auswerteeinrichtung 3 zugeführten Aktuatorgeschwindigkeit-Sollwert $n_{soll}$ entspricht. Hierzu wird in dem Fall, dass der Positionsregler 5 als ein P-Regler mit einer Verstärkung $K_p$ ausgeführt ist, der Aktuatorgeschwindigkeit-Sollwert $n_{soll}$ durch die Verstärkung $K_p$ geteilt (Block 10) und zum Aktuatorposition-Istwert $\varphi_{ist}$ hinzuaddiert (Block 11). Das Ergebnis wird dem Positionsregler 5 als Sollwert $\varphi_{in\text{-}soll}$ zusammen mit dem Aktuatorposition-Istwert $\varphi_{ist}$ als Reglerstruktur-Eingangsgrößen $\varphi_{in\text{-}soll}$, $\varphi_{in\text{-}ist}$ zugeführt. Es folgt dann eine Regelung durch Positionsregler 5 und Geschwindigkeitsregler 6 wie im Zusammenhang mit Fig. 2 erläutert.

Bei einer Positionsregelung kann zwischen zwei Regelungsarten unterschieden werden: eine "relative" Positionsregelung (gekennzeichnet durch einen Regelungsmodus-Parameter M3), in welcher der Reglervorrichtung 1 neben dem Aktuatorposition-Istwert $\varphi_{ist}$ ein relativer Aktuatorposition-Sollwert $\Delta\varphi_{soll}$ als Eingangsgröße zugeführt wird, wobei der relative Aktuatorposition-Sollwert $\Delta\varphi_{soll}$ einer gewünschten Aktuatorpositionsänderung entspricht, sowie eine "absolute" Positionsregelung (gekennzeichnet durch einen Regelungsmodus-Parameter M4), in welcher der Reglervorrichtung 1 neben dem Aktuatorposition-Istwert $\varphi_{ist}$ ein absoluter Aktuatorposition-Sollwert $\varphi_{soll}$ als Eingangsgröße zugeführt wird, wobei der Aktuatorposition-Sollwert $\Delta\varphi_{soll}$ der gewünschten absoluten Aktuatorposition entspricht.

Für die "relative" Positionsregelung M3 wird die Aktuatorposition $\varphi_{ist}$ in einem Zwischenspeicher, z.B. in der Auswahl- und Auswerteeinrichtung 3, temporär zwischengespeichert, so dass bei einem Eintritt in die "relative" Positionsregelung M3 ein Aktuatorposition-Wert $\varphi_{store}$ von einem Zeitpunkt kurz vor dem Eintritt in die Positionsregelung M3 verfügbar ist. Zur "relativen" Positionsregelung wird dann in der Auswahl- und Auswerteeinrichtung 3 aus dem relativen Aktuatorposition-Sollwert $\Delta\varphi_{soll}$ und dem vor Eintritt in den Regelungsmodus M3 abgespeicherten Aktuatorposition-Wert $\varphi_{store}$ ein Reglerstruktur-Eingangssollwert $\varphi_{in-soll}$ durch Addition gemäß

$$\varphi_{in\text{-}soll} = \varphi_{store} + \Delta\varphi_{soll}$$

bestimmt und an den Positionsregler 5 ausgegeben.

Bei der "absoluten" Positionsregelung M4 werden der der Auswahl- und Auswerteeinrichtung 3 zugeführte Aktuatorposition-Sollwert und -Istwert $\varphi_{soll}$, $\varphi_{ist}$ einfach direkt dem Positionsregler 5 als Reglerstruktur-Eingangssollwert $\varphi_{in-soll}$ und Reglerstruktur-Eingangsistwert $\varphi_{in-ist}$ zugeführt.

Zusammenfassend kann man also sagen, dass die Auswahl- und Auswerteeinrichtung 3 die Reglerstruktur-Eingangsgrößen $\varphi_{in-soll}$, $\varphi_{in-ist}$ derart für die Reglerstruktur 4 bereitstellt, dass Reglervorrichtung 1 mit der selben Reglerstruktur 4 eine Kraftregelung zur Einstellung eines Aktuatorspannkraft-Sollwertes oder eine Positionsregelung zur Einstellung eines Aktuatorposition-Sollwertes oder eine Drehzahlregelung zur Einstellung eines Aktuatordrehzahl-Sollwertes durchführen kann.

Reglervorrichtung 1 stellt eine dynamische Abgleicheinrichtung dar und sorgt dafür, dass entsprechend dem gewählten Regelungsmodus Kraftregelung M1 oder Geschwindigkeitsregelung M2 oder Positionsregelung M3, M4 die Zuspannkraft oder die Aktuatorgeschwindigkeit oder die Aktuatorposition der entsprechenden Führungsgröße Aktuatorspannkraft-Sollwert $F_{soll}$, Aktuatorgeschwindigkeit-Sollwert $n_{soll}$ oder (absoluter bzw. relativer) Aktuatorposition-Sollwert $\varphi_{soll}$, $\Delta\varphi_{soll}$ folgt.

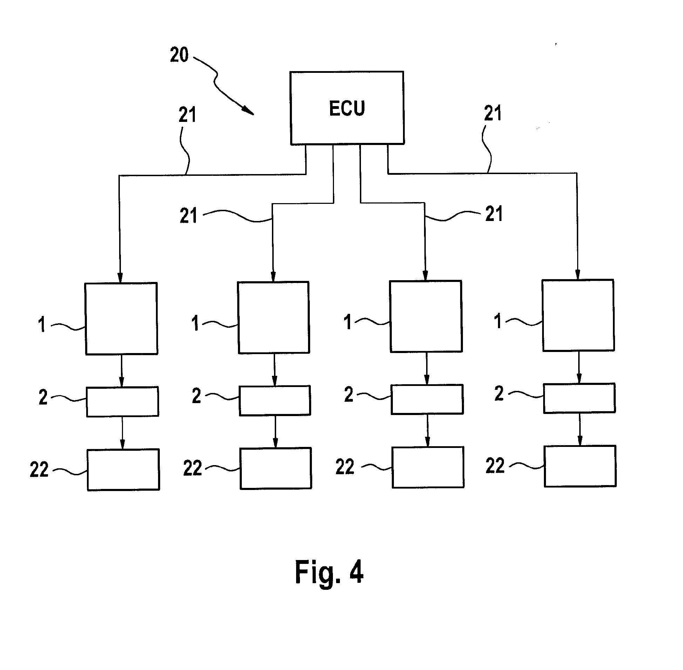

In Fig. 4 ist ein Ausführungsbeispiel eines erfindungsgemäßen elektronischen Bremssystems rein schematisch dargestellt. Bremssystem 20 umfasst eine zentrale Kontrolleinheit ECU und zumindest eine elektrisch betätigbare Bremse 22, welche von einem Aktuator 2 betätigbar ist, der von einer Reglervorrichtung 1 gesteuert bzw. geregelt wird. In Fig. 4 sind beispielsgemäß vier Radbremsen 22 mit jeweils einem Aktuator 2 und einer zugehörigen Reglervorrichtung 1 dargestellt. Die zentrale Kontrolleinheit ECU ist mit den Reglervorrichtungen 1 verbunden (Verbindungen 21 sind in Fig. 4 schematisch dargestellt). In der zentralen Kontrolleinheit ECU wird anhand der der Kontrolleinheit ECU vorliegenden Informationen und Anforderungen, wie z.B. Fahrerbremswunsch, Anforderungen eines Schlupfregelsystems (ABS: Antiblockiersystems, TCS: Traktionsregelsystem) oder Fahrerassistenzsystems (ESC: electronic stability control), Initialisierungsanforderung, Anforderung zur Lüftspieleinstellung etc., eine Entscheidung über den gewünschten Regelungsmodus (Kraftregelung M1 oder Geschwindigkeitsregelung M2 oder Positionsregelung M3, M4) getroffen, welche in Form des Regelungsmodus-Parameter MX an die Reglervorrichtungen 1 weitergegeben wird. Weiterhin gibt die zentrale Kontrolleinheit ECU den Reglervorrichtungen 1 entsprechend der Anforderung und des gewünschten Regelungsmodus einen Sollwert ($F_{soll}$, $\varphi_{soll}$, $\Delta\varphi_{soll}$, $n_{soll}$) als Führungsgröße für die Regelung vor.

Eine Reglervorrichtung, welche die beschriebenen Arten von Regelungsmodi M1-M4 durchführen kann, ist vorteilhaft, um verschiedene Anforderungen an die Bremse erfüllen zu können. So wird eine Kraftregelung z.B. zur Einstellung der vom Fahrer gewünschten Bremskraft oder bei schlupfgeregelten Bremsvorgängen durchgeführt. Eine Positionsregelung wird z.B. durchgeführt, um das Lüftspiel bei einer Scheibenbremse, d.h. den Abstand zwischen der Bremsscheibe und dem verschiebbaren Bremsbelag, auf einen vorbestimmten Wert einzustellen. Um eine elektromechanische Bremse, welche einen mechanischen Verriegelungsmechanismus zur Realisierung einer Parkbremsfunktion umfasst, zu verriegeln, wird ebenfalls eine Positionsregelung durchgeführt, um den Aktuator in die passende Position zum Eingreifen der Verriegelung zu bringen. Eine Geschwindigkeitsregelung kann z.B. zur Bestimmung des den Bremsbelägen abgewandten Anschlags des Aktuators durchgeführt werden.

**Patentansprüche**

1. Verfahren zur Regelung einer mittels eines Aktuators (2) elektrisch betätigbaren Bremse, bei welchem mittels eines Spannkraftsensors (7) ein Aktuatorspannkraft-Istwert ($F_{ist}$) und mittels eines Lagesensors (8) ein Aktuatorposition-Istwert ($\varphi_{ist}$) und/oder ein Aktuatorgeschwindigkeit-Istwert ($n_{ist}$) ermittelt werden, und bei welchem mittels einer Reglervorrichtung (1) eine Stellgröße (U) zur Ansteuerung des Aktuators (2) erzeugt wird, **dadurch gekennzeichnet, dass** die Reglervorrichtung (1) eine Auswahl- und Auswerteeinrichtung (3) und eine Reglerstruktur (4) umfasst, wobei die Auswahl- und Auswerteeinrichtung (3) der Reglerstruktur (4) als Reglerstruktur-Eingangsgrößen einen Reglerstruktur-Eingangssollwert ($\varphi_{in\text{-}soll}$) und einen Reglerstruktur-Eingangsistwert ($\varphi_{in\text{-}ist}$) zuführt, und wobei die Reglerstruktur-Eingangsgrößen ($\varphi_{in\text{-}soll}$, $\varphi_{in\text{-}ist}$) derart von der Auswahl- und Auswerteeinrichtung (3) bereitgestellt werden, dass die Reglervorrichtung (1) mit der selben Reglerstruktur (4) in zumindest zwei der Regelungsmodi Kraftregelung (M1) zur Einstellung eines Aktuatorspannkraft-Sollwertes ($F_{soll}$) oder Positionsregelung (M3, M4) zur Einstellung eines Aktuatorposition-Sollwertes ($\varphi_{soll}$, $\Delta\varphi_{soll}$) oder Geschwindigkeitsregelung (M2) zur Einstellung eines Aktuatorgeschwindigkeit-Sollwertes ($n_{soll}$) betrieben werden kann.

2. Verfahren nach Anspruch 1, **dadurch gekennzeichnet, dass** der Reglerstruktur (4) von der Auswahl- und Auswerteeinrichtung (3) als Reglerstruktur-Eingangsgrößen in jedem Regelungsmodus (M1, M2, M3, M4) dieselbe vorgegebene physikalische Aktuatorgröße ($\varphi$) zugeführt wird.

3. Verfahren nach einem der Ansprüche 1 oder 2, **dadurch gekennzeichnet, dass** der Auswahl- und Auswerteeinrichtung (3) als Eingangsgrößen ein Regelungsmodus-Parameter (MX), welcher den von der Reglervorrichtung (1) durchzuführenden Regelungsmodus (M1, M2, M3, M4) bestimmt, und, insbesondere in Abhängigkeit von dem Regelungsmodus-Parameter (MX), zumindest ein Aktuator-Istwert ($F_{ist}$, $\varphi_{ist}$) und zumindest ein Aktuator-Sollwert ($F_{soll}$, $\varphi_{soll}$, $\Delta\varphi_{soll}$, $n_{soll}$) zugeführt werden.

4. Verfahren nach Anspruch 3, **dadurch gekennzeichnet, dass** der Auswahl- und Auswerteeinrichtung (3) der Aktuatorspannkraft-Istwert ($F_{ist}$) und der Aktuatorposition-Istwert ($\varphi_{ist}$) zugeführt werden und dass die Auswahl- und Auswerteeinrichtung (3) in Abhängigkeit von dem Regelungsmodus-Parameter (MX) den Aktuatorspannkraft-Istwert ($F_{ist}$) oder den Aktuatorposition-Istwert ($\varphi_{ist}$) zur Bestimmung des Reglerstruktur-Eingangssollwertes ($\varphi_{in\text{-}soll}$) auswertet.

5. Verfahren nach einem der Ansprüche 2 bis 4, **dadurch gekennzeichnet, dass** die Reglerstruktur (4) zumindest einen Positionsregler (5) umfasst und dass der Reglerstruktur (4) von der Auswahl- und Auswerteeinrichtung (3) als Reglerstruktur-Eingangsgrößen in jedem Regelungsmodus (M1, M2, M3, M4) eine Aktuatorposition ($\varphi$) für Reglerstruktur-Eingangssollwert ($\varphi_{in\text{-}soll}$) und Reglerstruktur-Eingangsistwert ($\varphi_{in\text{-}ist}$) zugeführt wird.

6. Verfahren nach Anspruch 5, **dadurch gekenn-** zeichnet, **dass** die Reglerstruktur (4) einen Positionsregler (5) und einen dem Positionsregler (5) nachgeschalteten Geschwindigkeitsregler (6) umfasst, wobei dem Geschwindigkeitsregler (6) als Eingangsgrößen ein von dem Positionsregler (5) ausgegebener Aktuatorgeschwindigkeit-Sollwert ($n_{aus\text{-}soll}$) und der Aktuatorgeschwindigkeit-Istwert ($n_{ist}$) zugeführt werden.

7. Verfahren nach Anspruch 5 oder 6, **dadurch gekennzeichnet, dass** in dem Regelungsmodus Kraftregelung (M1) der Auswahl- und Auswerteeinrichtung (3) zumindest ein Aktuatorspannkraft-Sollwert ($F_{soll}$) und ein Aktuatorspannkraft-Istwert ($F_{ist}$) zugeführt werden, dass in der Auswahl- und Auswerteeinrichtung (3) anhand eines vorgegebenen Zusammenhangs (f) zwischen Aktuatorposition ($\varphi$) und Aktuatorspannkraft (F) aus dem Aktuatorspannkraft-Sollwert ($F_{soll}$) ein Reglerstruktur-Eingangssollwert ($\varphi_{in\text{-}soll}$) und aus dem Aktuatorspannkraft-Istwert ($F_{ist}$) ein Reglerstruktur-Eingangsistwert ($\varphi_{in\text{-}ist}$) bestimmt werden, und dass der bestimmte Reglerstruktur-Eingangssollwert ($\varphi_{in\text{-}soll}$) und der bestimmte Reglerstruktur-Eingangsistwert ($\varphi_{in\text{-}ist}$) dem Positionsregler (5) der Reglerstruktur (4) als Reglerstruktur-Eingangsgrößen ($\varphi_{in\text{-}soll}$, $\varphi_{in\text{-}ist}$) zugeführt werden.

8. Verfahren nach einem der Ansprüche 5 bis 7, **dadurch gekennzeichnet, dass** in dem Regelungsmodus Geschwindigkeitsregelung (M2) der Auswahl- und Auswerteeinrichtung (3) zumindest ein Aktuatorgeschwindigkeit-Sollwert ($n_{soll}$) und ein Aktuatorposition-Istwert ($\varphi_{ist}$) zugeführt werden, dass in der Auswahl- und Auswerteeinrichtung (3) aus dem Aktuatorgeschwindigkeit-Sollwert ($n_{soll}$) ein Reglerstruktur-Eingangssollwert ($\varphi_{in\text{-}soll}$) bestimmt wird, und dass der bestimmte Reglerstruktur-Eingangssollwert ($\varphi_{in\text{-}soll}$) und der Aktuatorposition-Istwert ($\varphi_{ist}$) dem Positionsregler (5) der Reglerstruktur (4) als Reglerstruktur-Eingangsgrößen ($\varphi_{in\text{-}soll}$, $\varphi_{in\text{-}ist}$) zugeführt werden.

9. Verfahren nach Anspruch 8 rückbezogen auf Anspruch 6 oder 7, **dadurch gekennzeichnet, dass** der Reglerstruktur-Eingangssollwert ($\varphi_{in\text{-}soll}$) derart aus dem Aktuatorgeschwindigkeit-Sollwert ($n_{soll}$), welcher der Auswahl- und Auswerteeinrichtung (3) zugeführt wird, berechnet wird, dass der von dem Positionsregler (5) ausgegebener Aktuatorgeschwindigkeit-Sollwert ($n_{aus\text{-}soll}$) in etwa gleich dem Aktuatorgeschwindigkeit-Sollwert ($n_{soll}$) ist, welcher der Auswahl- und Auswerteeinrichtung (3) zugeführt wird.

10. Verfahren nach einem der Ansprüche 5 bis 9, **dadurch gekennzeichnet, dass** die Reglervorrichtung (1) in einem Regelungsmodus (M3) mit relativer Positionsregelung betreibbar ist, in welcher der Auswahl- und Auswerteeinrichtung (3) zumindest ein relativer Aktuatorposition-Sollwert, welcher die gewünschte Positionsänderung ($\Delta\varphi_{soll}$) der Aktuatorposition angibt, und ein Aktuatorposition-Istwert ($\varphi_{ist}$) zugeführt werden, dass in der Auswahl- und Auswerteeinrichtung (3) aus dem relativen Aktuatorposition-Sollwert ($\Delta\varphi_{soll}$) und einem vor Eintritt in den Regelungsmodus (M3) mit relativer Positionsregelung abgespeicherten Aktuatorposition-Wert ($\varphi_{store}$) ein Reglerstruktur-Eingangssollwert ($\varphi_{in-soll}$) bestimmt wird, und dass der bestimmte Reglerstruktur-Eingangssollwert ($\varphi_{in-soll}$) und der Aktuatorposition-Istwert ($\varphi_{ist}$) dem Positionsregler (5) der Reglerstruktur (4) als Reglerstruktur-Eingangsgrößen ($\varphi_{in-soll}$, $\varphi_{in-ist}$) zugeführt werden.

11. Vorrichtung zur Regelung einer mittels eines Aktuators (2) elektrisch betätigbaren Bremse mit einem Spannkraftsensor (7) zur Ermittlung eines Aktuatorspannkraft-Istwertes ($F_{ist}$), mit einem Lagesensor (8) zur Ermittlung eines Aktuatorposition-Istwertes ($\varphi_{ist}$) und/oder eines Aktuatorgeschwindigkeit-Istwertes ($n_{ist}$) und mit einer Reglervorrichtung (1), welche eine Stellgröße (U) erzeugt, mit welcher der Aktuator (2) angesteuert wird, **dadurch gekennzeichnet, dass** die Reglervorrichtung (1) eine Auswahl- und Auswerteeinrichtung (3) und eine Reglerstruktur (4) umfasst, wobei der Reglerstruktur (4) als Reglerstruktur-Eingangsgrößen ein Reglerstruktur-Eingangssollwert ($\varphi_{in-soll}$) und ein Reglerstruktur-Eingangsistwert ($\varphi_{in-ist}$) von der Auswahl- und Auswerteeinrichtung (3) zugeführt werden, und wobei die Auswahl- und Auswerteeinrichtung (3) die Reglerstruktur-Eingangsgrößen ($\varphi_{in-soll}$, $\varphi_{in-ist}$) derart für die Reglerstruktur (4) bereitstellt, dass die Reglervorrichtung (1) mit der selben Reglerstruktur (4) in zumindest zwei der Regelungsmodi Kraftregelung (M1) zur Einstellung eines Aktuatorspannkraft-Sollwertes ($F_{soll}$) oder Positionsregelung (M3, M4) zur Einstellung eines Aktuatorposition-Sollwertes ($\varphi_{soll}$, $\Delta\varphi_{soll}$) oder Geschwindigkeitsregelung (M2) zur Einstellung eines Aktuatorgeschwindigkeit-Sollwertes ($n_{soll}$) betreibbar ist.

12. Vorrichtung nach Anspruch 11, **dadurch gekennzeichnet, dass** die Auswahl- und Auswerteeinrichtung (3) derart ausgeführt ist, dass der Reglerstruktur (4) als Reglerstruktur-Eingangsgrößen von der Auswahl- und Auswerteeinrichtung (3) in jedem Regelungsmodus (M1, M2, M3, M4) dieselbe vorgegebene physikalische Aktuatorgröße ($\varphi$) für Reglerstruktur-Eingangssollwert und Reglerstruktur-Eingangsistwert zugeführt wird.

13. Vorrichtung nach Anspruch 11 oder 12, **dadurch gekennzeichnet, dass** die Reglerstruktur (4) zumindest einen Positionsregler (5) und einen dem Positionsregler (5) nachgeschalteten Geschwindigkeitsregler (6) umfasst, wobei dem Positionsregler (5) von der Auswahl- und Auswerteeinrichtung (3) als Reglerstruktur-Eingangsgrößen in jedem Regelungsmodus (M1, M2, M3, M4) eine Aktuatorposition ($\varphi$) für Reglerstruktur-Eingangssollwert ($\varphi_{in-soll}$) und Reglerstruktur-Eingangsistwert ($\varphi_{in-ist}$) zugeführt wird, und wobei dem Geschwindigkeitsregler (6) als Eingangsgrößen ein von dem Positionsregler (5) ausgegebener Aktuatorgeschwindigkeit-Sollwert ($n_{aus-soll}$) und der Aktuatorgeschwindigkeit-Istwert ($n_{ist}$) zugeführt werden.

14. Elektronisches Bremssystem (20) für ein Kraftfahrzeug mit zumindest einer mittels eines Aktuators (2) elektrisch betätigbaren Bremse (22) für eine Betriebs- und/oder Feststellbremsfunktion und mit einer Steuer- und Regeleinheit (ECU), **dadurch gekennzeichnet, dass** die Steuer- und Regeleinheit (ECU) zumindest eine Vorrichtung gemäß einem der Ansprüche 11 bis 13 aufweist oder mit zumindest einer Vorrichtung gemäß einem der Ansprüche 11 bis 13 verbunden (21) ist.

**Claims**

1. Method for controlling a brake which can be actuated electrically by means of an actuator (2), in which an actuator clamping force actual value ($F_{ist}$) is determined by means of a clamping force sensor (7) and an actuator position actual value ($\varphi_{ist}$) and/or an actuator speed actual value ($n_{ist}$) is/are determined by means of a position sensor (8), and in which a manipulated variable (U) for activating the actuator (2) is generated by means of a controller device (1), **characterized in that** the controller device (1) includes a selection and evaluation device (3) and a controller structure (4), the selection and evaluation device (3) supplying to the controller structure (4) a controller structure input reference value ($\varphi_{in-soll}$) and a controller structure input actual value ($\varphi_{in-ist}$) as controller structure input variables, and the controller structure input variables ($\varphi_{in-soll}$, $\varphi_{in-ist}$) being made available by the selection and evaluation device (3) in such a way that the controller device (1) can be operated using the same controller structure (4) in at least two of the control modes: force control (M1) for adjusting an actuator clamping force reference value ($F_{soll}$), or position control (M3, M4) for adjusting an actuator position reference value ($\varphi_{soll}$, $\Delta\varphi_{soll}$), or speed control (M2) for adjusting an actuator speed reference value ($n_{soll}$).

2. Method according to Claim 1, **characterized in that** the same predetermined physical actuator variable ($\varphi$) is supplied to the controller structure (4) by the selection and evaluation device (3) as controller structure input variables in each control mode (M1, M2, M3, M4).

3. Method according to either of Claims 1 and 2, **characterized in that** a control mode parameter (MX) which determines the control mode (M1, M2, M3, M4) to be executed by the controller device (1), and, in particular as a function of the control mode parameter (MX), at least one actuator actual value ($F_{ist}$, $\varphi_{ist}$) and at least one actuator reference value ($F_{soll}$, $\varphi_{soll}$, $\Delta\varphi_{soll}$, $n_{soll}$), are supplied to the selection and evaluation device (3) as input variables.

4. Method according to Claim 3, **characterized in that** the actuator clamping force actual value ($F_{ist}$) and the actuator position actual value ($\varphi_{ist}$) are supplied to the selection and evaluation device (3), and **in that** the selection and evaluation device (3) evaluates the actuator clamping force actual value ($F_{ist}$) or the actuator position actual value ($\varphi_{ist}$) as a function of the control mode parameter (MX) in order to determine the controller structure input reference value ($\varphi_{in-soll}$).

5. Method according to any one of Claims 2 to 4, **characterized in that** the controller structure (4) includes at least one position controller (5) and **in that** in each control mode (M1, M2, M3, M4) an actuator position ($\varphi$) for controller structure input reference value ($\varphi_{in-soll}$) and controller structure input actual value ($\varphi_{in-ist}$) is supplied to the controller structure (4) by the selection and evaluation device (3) as controller structure input variables.

6. Method according to Claim 5, **characterized in that** the controller structure (4) includes a position controller (5) and a speed controller (6) connected downstream of the position controller (5), an actuator speed reference value ($n_{aus-soll}$) output by the position controller (5) and the actuator speed actual value ($n_{ist}$) being supplied to the speed controller (6) as input variables.

7. Method according to Claim 5 or 6, **characterized in that** in the control mode speed control (M1) at least an actuator clamping force reference value ($F_{soll}$) and an actuator clamping force actual value ($F_{ist}$) are supplied to the selection and evaluation device (3), **in that**, in the selection and evaluation device (3), with reference to a predefined relationship (f) between actuator position ($\varphi$) and actuator clamping force (F), a controller structure input reference value ($\varphi_{in-soll}$) is determined from the actuator clamping force reference value ($F_{soll}$), and a controller structure input actual value ($\varphi_{in-ist}$) is determined from the actuator clamping force actual value ($F_{ist}$), and **in that** the determined controller structure input reference value ($\varphi_{in-soll}$) and the determined controller structure input actual value ($\varphi_{in-ist}$) are supplied to the position controller (5) of the controller structure (4) as controller structure input variables ($\varphi_{in-soll}$, $\varphi_{in-ist}$).

8. Method according to any one of Claims 5 to 7, **characterized in that** in the control mode speed control (M2) at least an actuator speed reference value ($n_{soll}$) and an actuator position actual value ($\varphi_{ist}$) are supplied to the selection and evaluation device (3), **in that** a controller structure input reference value ($\varphi_{in-soll}$) is determined from the actuator speed reference value ($n_{soll}$) in the selection and evaluation device (3), and **in that** the determined controller structure input reference value ($\varphi_{in-soll}$) and the actuator position actual value ($\varphi_{ist}$) are supplied to the position controller (5) of the controller structure (4) as controller structure input variables ($\varphi_{in-soll}$, $\varphi_{in-ist}$).

9. Method according to Claim 8 with reference to Claim 6 or 7, **characterized in that** the controller structure input reference value ($\varphi_{in-soll}$) is calculated from the actuator speed reference value ($n_{soll}$ supplied to the selection and evaluation device (3) in such a way that the actuator speed reference value ($n_{aus-soll}$) output by the position controller (5) is approximately equal to the actuator speed reference value ($n_{soll}$) which is supplied to the selection and evaluation device (3).

10. Method according to any one of Claims 5 to 9, **characterized in that** the controller device (1) can be operated in a control mode (M3) with relative position control, in which at least a relative actuator position reference value indicating the desired position change ($\Delta\varphi_{soll}$) of the actuator position, and an actuator position actual value ($\varphi_{ist}$), are supplied to the selection and evaluation device (3), **in that** a controller structure input reference value ($\varphi_{in-soll}$) is determined in the selection and evaluation device (3) from the relative actuator position reference value ($\Delta\varphi_{soll}$) and from an actuator position value ($\varphi_{store}$) stored before entering the control mode (M3) with relative position control, and **in that** the determined controller structure input reference value ($\varphi_{in-soll}$) and the actuator position actual value ($\varphi_{ist}$) are supplied to the position controller (5) of the controller structure (4) as controller structure input variables ($\varphi_{in-soll}$, $\varphi_{in-ist}$).

11. Device for controlling a brake which can be actuated electrically by means of an actuator (2), comprising a clamping force sensor (7) for determining an actuator clamping force actual value ($F_{ist}$), a position sensor (8) for determining an actuator position actual value ($\varphi_{ist}$) and/or an actuator speed actual value ($n_{ist}$), and comprising a controller device (1) which generates a manipulated variable (U) with which the actuator (2) is activated, **characterized in that** the controller device (1) includes a selection and evaluation device (3) and a controller structure (4), a controller structure input reference value ($\varphi_{in\text{-}soll}$) and a controller structure input actual value ($\varphi_{in\text{-}ist}$) being supplied to the controller structure (4) by the selection and evaluation device (3) as controller structure input variables, and the selection and evaluation device (3) making available the controller structure input variables ($\varphi_{in\text{-}soll}$, $\varphi_{in\text{-}ist}$) for the controller structure (4) in such a way that the controller device (1) can be operated using the same controller structure (4) in at least two of the control modes: force control (M1) for adjusting an actuator clamping force reference value ($F_{soll}$), or position control (M3, M4) for adjusting an actuator position reference value ($\varphi_{soll}$, $\Delta\varphi_{soll}$), or speed control (M2) for adjusting an actuator speed reference value ($n_{soll}$).

12. Device according to Claim 11, **characterized in that** the selection and evaluation device (3) is configured in such a way that the same predetermined physical actuator variable ($\varphi$) for controller structure input reference value and controller structure input actual value is supplied to the controller structure (4) by the selection and evaluation device (3) as controller structure input variables in each control mode (M1, M2, M3, M4).

13. Device according to Claim 11 or 12, **characterized in that** the controller structure (4) includes at least a position controller (5) and a speed controller (6) connected downstream of the position controller (5), an actuator position ($\varphi$) for controller structure input reference value ($\varphi_{in\text{-}soll}$) and controller structure input actual value ($\varphi_{in\text{-}ist}$) being supplied to the position controller (5) by the selection and evaluation device (3) as controller structure input variables in each control mode (M1, M2, M3, M4), and an actuator speed reference value ($n_{aus\text{-}soll}$) output by the position controller (5), and the actuator speed actual value ($n_{ist}$), being supplied to the speed controller (6) as input variables.

14. Electronic brake system (20) for a motor vehicle having at least one brake (22) which can be actuated electrically by means of an actuator (2) for a service brake and/or parking brake function and having a control and regulation unit (ECU), **characterized in that** the control and regulation unit (ECU) has at least one device according to any one of Claims 11 to 13 or is connected (21) to at least one device according to any one of Claims 11 to 13.

**Revendications**

1. Procédé de régulation d'un frein pouvant être actionné électriquement à l'aide d'un actionneur (2), selon lequel sont déterminées une valeur réelle de la force de serrage de l'actionneur ($F_{ist}$) à l'aide d'un capteur de force de serrage (7) et une valeur réelle de la position de l'actionneur ($\varphi_{ist}$) et/ou une valeur réelle de la vitesse de l'actionneur ($n_{ist}$) à l'aide d'un capteur de position (8), et selon lequel une grandeur de réglage (U) destinée à commander l'actionneur (2) est générée à l'aide d'un appareil de régulation (1), **caractérisé en ce que** l'appareil de régulation (1) comprend un dispositif de sélection et d'interprétation (3) et une structure de régulation (4), le dispositif de sélection et d'interprétation (3) acheminant à la structure de régulation (4) en tant que grandeurs d'entrée de la structure de régulation une valeur de consigne d'entrée de structure de régulation ($\varphi_{in\text{-}soll}$) et une valeur réelle d'entrée de structure de régulation ($\varphi_{in\text{-}ist}$), et les grandeurs d'entrée de la structure de régulation ($\varphi_{in\text{-}soll}$, $\varphi_{in\text{-}ist}$) étant mises à disposition par le dispositif de sélection et d'interprétation (3) de telle sorte que l'appareil de régulation (1) peut fonctionner avec la même structure de régulation (4) dans au moins deux des modes de régulation Régulation de la force (M1) en vue de régler une valeur de consigne de la force de serrage de l'actionneur ($F_{soll}$) ou Régulation de la position (M3, M4) en vue de régler une valeur de consigne de la position de l'actionneur ($\varphi_{soll}$, $\Delta\varphi_{soll}$) ou Régulation de la vitesse (M2) en vue de régler une valeur de consigne de la vitesse de l'actionneur ($n_{soll}$).

2. Procédé selon la revendication 1, **caractérisé en ce que** le dispositif de sélection et d'interprétation (3) achemine à la structure de régulation (4) la même grandeur physique d'actionneur prédéfinie ($\varphi$) en tant que grandeurs d'entrée de la structure de régulation dans chaque mode de régulation (M1, M2, M3, M4).

3. Procédé selon l'une des revendications 1 ou 2, **caractérisé en ce que** les grandeurs d'entrée acheminées au dispositif de sélection et d'interprétation (3) sont un paramètre de mode de régulation (MX) qui détermine le mode de régulation (M1, M2, M3, M4) à exécuter par l'appareil de régulation (1) et aussi, notamment en fonction du paramètre de mode de régulation (MX), au moins une valeur réelle d'actionneur ($F_{ist}$, $\varphi_{ist}$) et au moins une valeur de consigne d'actionneur ($F_{soll}$, $\varphi_{soll}$, $\Delta\varphi_{soll}$, $n_{soll}$).

4. Procédé selon la revendication 3, **caractérisé en ce que** la valeur réelle de la force de serrage de l'actionneur ($F_{ist}$) et la valeur réelle de la position de l'actionneur ($\varphi_{ist}$) sont acheminées au dispositif de sélection et d'interprétation (3) et **en ce que** le dispositif de sélection et d'interprétation (3) interprète la valeur réelle de la force de serrage de l'actionneur ($F_{ist}$) ou la valeur réelle de la position de l'actionneur

($\varphi_{ist}$) en fonction du paramètre de mode de régulation (MX) en vue de déterminer la valeur de consigne d'entrée de structure de régulation ($\varphi_{in\text{-}soll}$).

5. Procédé selon l'une des revendications 2 à 4, **caractérisé en ce que** la structure de régulation (4) comprend au moins un régulateur de position (5) et **en ce que** le dispositif de sélection et d'interprétation (3) achemine à la structure de régulation (4) en tant que grandeurs d'entrée de la structure de régulation dans chaque mode de régulation (M1, M2, M3, M4) une position de l'actionneur ($\varphi$) pour la valeur de consigne d'entrée de structure de régulation ($\varphi_{in\text{-}soll}$) et la valeur réelle d'entrée de structure de régulation ($\varphi_{in\text{-}ist}$).

6. Procédé selon la revendication 5, **caractérisé en ce que** la structure de régulation (4) comprend un régulateur de position (5) et un régulateur de vitesse (6) branché en aval du régulateur de position (5), les grandeurs d'entrée acheminées au régulateur de vitesse (6) étant une valeur de consigne de vitesse de l'actionneur ($n_{aus\text{-}soll}$) délivrée par le régulateur de position (5) et la valeur réelle de la vitesse de l'actionneur ($n_{ist}$).

7. Procédé selon la revendication 5 ou 6, **caractérisé en ce que** dans le mode de régulation Régulation de la force (M1), au moins une valeur de consigne de la force de serrage de l'actionneur ($F_{soll}$) et une valeur réelle de la force de serrage de l'actionneur ($F_{ist}$) sont acheminées au dispositif de sélection et d'interprétation (3), **en ce que** dans le dispositif de sélection et d'interprétation (3), à l'aide d'une relation prédéfinie (f) entre la position de l'actionneur ($\varphi$) et la force de serrage de l'actionneur (F), sont déterminées une valeur de consigne d'entrée de structure de régulation ($\varphi_{in\text{-}soll}$) à partir de la valeur de consigne de la force de serrage de l'actionneur ($F_{soll}$) et une valeur réelle d'entrée de structure de régulation ($\varphi_{in\text{-}ist}$) à partir de la valeur réelle de la force de serrage de l'actionneur ($F_{ist}$), et **en ce que** la valeur de consigne d'entrée de structure de régulation ($\varphi_{in\text{-}soll}$) déterminée et la valeur réelle d'entrée de structure de régulation ($\varphi_{in\text{-}ist}$) déterminée sont acheminées au régulateur de position (5) de la structure de régulation (4) en tant que grandeurs d'entrée de la structure de régulation ($\varphi_{in\text{-}soll}$, $\varphi_{in\text{-}ist}$).

8. Procédé selon l'une des revendications 5 à 7, **caractérisé en ce que** dans le mode de régulation Régulation de la vitesse (M2), au moins une valeur de consigne de la vitesse de l'actionneur ($n_{soll}$) et une valeur réelle de la position de l'actionneur ($\varphi_{ist}$) sont acheminées au dispositif de sélection et d'interprétation (3), **en ce qu'**une valeur de consigne d'entrée de structure de régulation ($\varphi_{in\text{-}soll}$) est déterminée dans le dispositif de sélection et d'interprétation (3) à partir de la valeur de consigne de la vitesse de l'actionneur ($n_{soll}$), et **en ce que** la valeur de consigne d'entrée de structure de régulation ($\varphi_{in\text{-}soll}$) déterminée et la valeur réelle de la position de l'actionneur ($\varphi_{ist}$) sont acheminées au régulateur de position (5) de la structure de régulation (4) en tant que grandeurs d'entrée de la structure de régulation ($\varphi_{in\text{-}soll}$, $\varphi_{in\text{-}ist}$).

9. Procédé selon la revendication 8 en référence à la revendication 6 ou 7, **caractérisé en ce que** la valeur de consigne d'entrée de structure de régulation ($\varphi_{in\text{-}soll}$) est calculée à partir de la valeur de consigne de la vitesse de l'actionneur ($n_{soll}$), laquelle est acheminée au dispositif de sélection et d'interprétation (3), de telle sorte que la valeur de consigne de vitesse de l'actionneur ($n_{aus\text{-}soll}$) délivrée par le régulateur de position (5) est approximativement égale à la valeur de consigne de la vitesse de l'actionneur ($n_{soll}$) qui est acheminée au dispositif de sélection et d'interprétation (3).

10. Procédé selon l'une des revendications 5 à 9, **caractérisé en ce que** l'appareil de régulation (1) peut fonctionner dans un mode de régulation (M3) avec régulation de la position relative, dans laquelle au moins une valeur de consigne de la position relative de l'actionneur, laquelle indique la modification de position souhaitée ($\Delta\varphi_{soll}$) de la position de l'actionneur, et une valeur réelle de la position de l'actionneur ($\varphi_{ist}$) sont acheminées au dispositif de sélection et d'interprétation (3), **en ce qu'**une valeur de consigne d'entrée de structure de régulation ($\varphi_{in\text{-}soll}$) est déterminée dans le dispositif de sélection et d'interprétation (3) à partir de la valeur de consigne de la position relative de l'actionneur ($\Delta\varphi_{soll}$) et d'une valeur de la position de l'actionneur ($\varphi_{store}$) mise en mémoire avant l'entrée dans le mode de régulation (M3) avec régulation de la position relative, et **en ce que** la valeur de consigne d'entrée de structure de régulation ($\varphi_{in\text{-}soll}$) déterminée et la valeur réelle de la position de l'actionneur ($\varphi_{ist}$) sont acheminées au régulateur de position (5) de la structure de régulation (4) en tant que grandeurs d'entrée de la structure de régulation ($\varphi_{in\text{-}soll}$, $\varphi_{in\text{-}ist}$).

11. Appareil de régulation d'un frein pouvant être actionné électriquement à l'aide d'un actionneur (2), comprenant un capteur de force de serrage (7) destiné à déterminer une valeur réelle de la force de serrage de l'actionneur ($F_{ist}$), un capteur de position (8) destiné à déterminer une valeur réelle de la position de l'actionneur ($\varphi_{ist}$) et/ou une valeur réelle de la vitesse de l'actionneur ($n_{ist}$), et comprenant un appareil de régulation (1) qui génère une grandeur de réglage (U) avec laquelle est commandé l'actionneur (2), **caractérisé en ce que** l'appareil de régulation (1) comprend un dispositif de sélection et d'interprétation (3) et une structure de régulation (4), une valeur de consigne d'entrée de structure de régulation ($\varphi_{in\text{-soll}}$) et une valeur réelle d'entrée de structure de régulation ($\varphi_{in\text{-ist}}$) étant acheminées à la structure de régulation (4) par le dispositif de sélection et d'interprétation (3) en tant que grandeurs d'entrée de la structure de régulation, et le dispositif de sélection et d'interprétation (3) mettant à disposition de la structure de régulation (4) les grandeurs d'entrée de la structure de régulation ($\varphi_{in\text{-soll}}$, ($\varphi_{in\text{-ist}}$) de telle sorte que l'appareil de régulation (1) peut fonctionner avec la même structure de régulation (4) dans au moins deux des modes de régulation Régulation de la force (M1) en vue de régler une valeur de consigne de la force de serrage de l'actionneur ($F_{soll}$) ou Régulation de la position (M3, M4) en vue de régler une valeur de consigne de la position de l'actionneur ($\varphi_{soll}$, $\Delta\varphi_{soll}$) ou Régulation de la vitesse (M2) en vue de régler une valeur de consigne de la vitesse de l'actionneur ($n_{soll}$).

12. Appareil selon la revendication 11, **caractérisé en ce que** le dispositif de sélection et d'interprétation (3) est réalisé de telle sorte que la même grandeur physique d'actionneur prédéfinie ($\varphi$) pour la grandeur de consigne d'entrée de structure de régulation et la grandeur d'entrée réelle de structure de régulation est acheminée à la structure de régulation (4) en tant que grandeurs d'entrée de la structure de régulation par le dispositif de sélection et d'interprétation (3) dans chaque mode de régulation (M1, M2, M3, M4).

13. Appareil selon la revendication 11 ou 12, **caractérisé en ce que** la structure de régulation (4) comprend au moins un régulateur de position (5) et un régulateur de vitesse (6) branché en aval du régulateur de position (5), une position de l'actionneur ($\varphi$) pour la valeur de consigne d'entrée de structure de régulation ($\varphi_{in\text{-soll}}$) et la valeur réelle d'entrée de structure de régulation ($\varphi_{in\text{-ist}}$) étant acheminée au régulateur de position (5) par le dispositif de sélection et d'interprétation (3) en tant que grandeurs d'entrée de la structure de régulation dans chaque mode de régulation (M1, M2, M3, M4), et une valeur de consigne de vitesse de l'actionneur ($n_{aus\text{-soll}}$) délivrée par le régulateur de position (5) et la valeur réelle de la vitesse de l'actionneur ($n_{ist}$) étant acheminées au régulateur de vitesse (6) en tant que grandeurs d'entrée.

14. Système de frein électronique (20) pour un véhicule automobile, comprenant au moins un frein (22) pouvant être actionné électriquement à l'aide d'un actionneur (2) pour une fonction de frein de service et/ou d'immobilisation, et comprenant une unité de contrôle et de régulation (ECU), **caractérisé en ce que** l'unité de contrôle et de régulation (ECU) possède au moins un appareil selon l'une des revendications 11 à 13 ou est reliée (21) avec au moins un appareil selon l'une des revendications 11 à 13.

Fig. 1

Fig. 2

EP 2 582 561 B1

$n_{soll}$

$3$

$10$

$K_p$

$I$

$+$

$11$

$\varphi_{in\text{-}soll}$

$\varphi_{ist}$

$\varphi_{in\text{-}ist}$

$5$

$+$

$-$

$\Delta\varphi_5$

$K_p$

$n_{soll}$

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 05100114 A

- DE 10302515 A1